# EUROPEAN PATENT APPLICATION

(11) **EP 4 847 394 A1**
(43) Date of publication of application: **02.12.2026**
(21) Application number: 24920110.4
(22) Date of filing: 12.11.2024
(51) Int. Cl.: B64G 1/42, B64G 1/40, F03H 1/00

(54) **VOLTAGE GENERATION DEVICE**

(30) Priority: 22.01.2024 JP 2024007466
(71) Applicant: Japan Aerospace Exploration Agency, Tokyo 182-8522 (JP)
(72) Inventor: MATSUNAGA, Yoshiki, Chofu-shi, Tokyo 182-8522 (JP); CHO, Shinatora, Chofu-shi, Tokyo 182-8522 (JP); WATANABE, Hiroki, Chofu-shi, Tokyo 182-8522 (JP); KUSAWAKE, Hiroaki, Chofu-shi, Tokyo 182-8522 (JP)
(74) Representative: Richly & Ritschel Patentanwälte PartG mbB
(86) International application number: PCT/JP2024/040170
(87) International publication number: WO 2025/158752

(57) **Abstract**

A voltage generation device providable in a Hall thruster system that generates thrust for a spacecraft, wherein a Hall thruster constituting the Hall thruster system includes an anode electrode and a cathode electrode, a first end of the voltage generation device is connected to a first line on a side of the anode electrode in an anode power supply that supplies power between the anode electrode and the cathode electrode of the Hall thruster, and a second end of the voltage generation device that outputs an output voltage corresponding to an input voltage at the first end is connected to a keeper electrode arranged in proximity to a hollow cathode connected to the cathode electrode.

## Description

### TECHNICAL FIELD

The present invention relates to a voltage generation device.

Priority is claimed on Japanese Patent Application No. 2024-007466, filed January 22, 2024, the content of which is incorporated herein by reference.

### BACKGROUND ART

The use of electric propulsion devices, which generate thrust for controlling an orbit and attitude of spacecraft such as artificial satellites, has expanded, and the market is rapidly growing. Electric propulsion devices can reduce an amount of propellant gas required for spacecraft compared with chemical propulsion devices, and therefore, their adoption is increasing not only in satellites for deep-space exploration and geostationary satellites but also in constellation satellites operated in low Earth orbit. In recent years, the use of systems adopting Hall thrusters, particularly among electric propulsion systems, has been rapidly advancing. This is due to the advantage that Hall thruster systems provide high thrust per unit power.

A Hall thruster generates thrust by, for example, ionizing a predetermined gas such as xenon and accelerating ions extracted from the resulting plasma, and ejecting them into outer space. In a Hall thruster system, discharge is generated in the Hall thruster by power supplied from a power processing unit (PPU), and ions are extracted from plasma generated by this discharge. Here, the power processing unit includes, for example, a plurality of power supplies such as an anode power supply, a keeper power supply, a heater power supply, and a coil power supply, and a power control unit. This power processing unit accounts for a large proportion of the weight and cost of the Hall thruster system. Therefore, reducing the cost and size of the power processing unit is a very important issue for implementing the Hall thruster system.

In this regard, various techniques for reducing the size and cost of the power processing unit have conventionally been proposed. One such proposal is a technique for reducing the size of the anode power supply, which accounts for most of the power supplied to the Hall thruster among a plurality of power supplies constituting the power processing unit. As techniques for reducing the size of the anode power supply, for example, a technique for reducing the size by adopting a resonant converter as the anode power supply (e.g., Patent Document 1), and a technique for reducing the size of a filter provided in the anode power supply by varying an output voltage of the anode power supply at high frequency to suppress discharge instability peculiar to the Hall thruster (e.g., Patent Document 2), have been proposed. As another proposal, a technique in which a heater power supply for a hollow cathode provided in a Hall thruster among a plurality of power supplies constituting a power processing unit is eliminated (removed), and discharge in a hollow cathode is initiated by applying a high-voltage pulse generated by a keeper power supply has been proposed (e.g., Patent Document 3). In this conventional technique, an electron emission material is not heated by the heater power supply, but electrons are strongly extracted from the hollow cathode by a high-voltage pulse generated by the keeper power supply, thereby generating discharge and plasma between the hollow cathode and the keeper electrode.

### Citation List

### Patent Document

Patent Document 1: United States Patent No. 6169668
Patent Document 2: Japanese Unexamined Patent Application, First Publication No. 2014-005762
Patent Document 3: Published Japanese Translation No. 2022-530748 of the PCT International Publication

### SUMMARY OF INVENTION

### Technical Problem

However, in the conventional technique in which the size and cost of the power processing unit are reduced by miniaturizing the anode power supply, because the anode power supply, which is an essential power supply for accelerating and ejecting gas in the Hall thruster, is miniaturized, there may be another issue for securing the performance of the Hall thruster system, such as the need to improve the power density of the anode power supply. On the other hand, in the conventional technique in which the size and cost of the power processing unit are reduced by eliminating the heater power supply, there may be other issues for continuing the operation of the Hall thruster system, such as the need to suppress the wear of the material of the keeper electrode (or the end portion of the hollow cathode on the keeper electrode side) due to arc discharge of high-voltage pulses generated by the keeper power supply, and reduction in insulation between electrodes caused by such material wear. Therefore, in conventional techniques, it has been difficult in some cases to reduce the size and cost of the power processing unit when considering the mission to be performed by the spacecraft.

The present invention has been made on the basis of the above-described recognition of problems, and an objective thereof is to provide a voltage generation device capable of implementing a size reduction of a power processing unit that supplies power to a Hall thruster.

### Solution to Problem

To achieve the above-described objective, a voltage generation device according to an aspect of the present invention is a voltage generation device providable in a Hall thruster system that generates thrust for a spacecraft, wherein a Hall thruster constituting the Hall thruster system includes an anode electrode and a cathode electrode, a first end of the voltage generation device is connected to a first line on a side of the anode electrode in an anode power supply that supplies power between the anode electrode and the cathode electrode of the Hall thruster, and a second end of the voltage generation device that outputs an output voltage corresponding to an input voltage at the first end is connected to a keeper electrode arranged in proximity to a hollow cathode connected to the cathode electrode.

### Advantageous Effects of Invention

According to an aspect of the present invention, it is possible to provide a voltage generation device capable of implementing the size reduction of a power processing unit that supplies power to a Hall thruster.

### BRIEF DESCRIPTION OF DRAWINGS

[FIG. 1] A diagram showing an example of a configuration of a Hall thruster system including a power processing unit having a voltage generation device according to an embodiment.
[FIG. 2] A diagram showing an example of an operation of a Hall thruster system using a voltage generation device according to an embodiment.
[FIG. 3] A diagram showing an example of another configuration of the voltage generation device according to an embodiment.
[FIG. 4] A diagram showing an example of yet another configuration of the voltage generation device according to an embodiment.
[FIG. 5] A diagram showing an example of a configuration of an anode power supply used by the voltage generation device according to an embodiment and a connection of the voltage generation device.

### DESCRIPTION OF EMBODIMENTS

Hereinafter, embodiments of a voltage generation device of the present invention will be described with reference to the drawings. When the present application is translated from Japanese into English, as used throughout the present disclosure, the singular forms "a," "an," and "the" include plural references unless the context clearly dictates otherwise. The voltage generation device of the present invention is applied to a Hall thruster system including a Hall thruster. The Hall thruster is, for example, an electric propulsion device that generates thrust for controlling the orbit of a spacecraft moving in outer space or controlling the attitude of the spacecraft, by accelerating ions extracted from plasma generated by ionizing a predetermined gas (propellant gas) such as xenon and ejecting them into outer space. The propellant gas may be, for example, krypton, argon, nitrogen, oxygen, vaporized iodine, water, or the like.

A spacecraft adopting a Hall thruster system may be an artificial satellite that moves while orbiting along a predetermined orbit above the surface of the Earth or above the surface of another celestial body or object, or may be an observation satellite that travels to observe another celestial body or object (and may further return to the Earth). Examples of other celestial bodies include planets other than the Earth such as Mars and Venus, satellites such as the Moon and Titan, asteroids such as Itokawa and Ryugu, and the like. Examples of other objects include rocks and the like.

### [Configuration of Hall Thruster System]

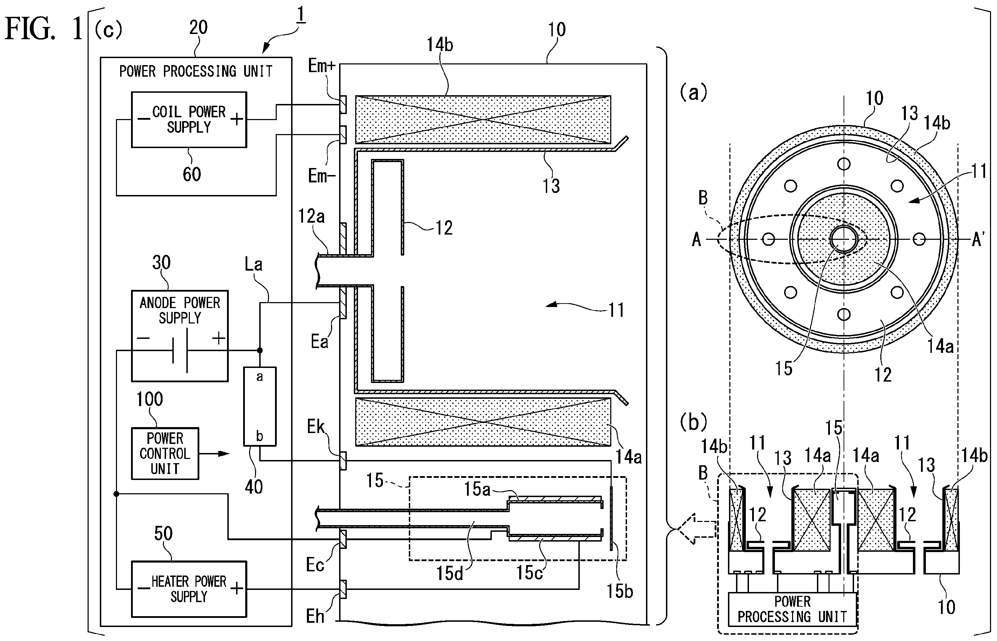

FIG. 1 is a diagram showing an example of a configuration of a Hall thruster system including a power processing unit having a voltage generation device according to an embodiment. A Hall thruster system 1 includes, for example, a Hall thruster 10 and a power processing unit (PPU) 20. In FIG. 1(a), an example when the Hall thruster 10 is viewed from the side that ejects ions extracted from plasma into outer space is shown. In FIG. 1(b), an example of a cross-sectional view taken along line A-A' of the Hall thruster 10 shown in FIG. 1(a) and an example of a connection between the Hall thruster 10 and the power processing unit 20 are shown. In FIG. 1(c), an example of the configuration of the Hall thruster system 1 is shown in a state in which a range of a region B of the Hall thruster 10 shown in FIGS. 1(a) and 1(b) is enlarged.

First, the structure of the Hall thruster 10 will be described with reference to FIGS. 1(a) and 1(b). In the Hall thruster 10, a hollow cathode portion 15 is arranged at the center of a cylindrical housing, and from the center toward the outer periphery, an internal electromagnet 14a, a channel portion 11, and an external electromagnet 14b are arranged annularly in this order. In the following description, when each of the internal electromagnet 14a and the external electromagnet 14b is not distinguished, it is simply referred to as an "electromagnet 14." In the Hall thruster 10, the channel portion 11 is formed as a groove along the electromagnet 14, and the periphery of the groove is surrounded by a wall portion 13 made of, for example, ceramic. Also, an anode 12 is arranged at the bottom of the groove forming the channel portion 11.

Next, a more detailed configuration of the Hall thruster 10 and the power processing unit 20, and a connection between the Hall thruster 10 and the power processing unit 20 will be described with reference to FIG. 1(c). As described above, the Hall thruster 10 includes, for example, the channel portion 11, the anode 12, the wall portion 13, the electromagnet 14, and the hollow cathode portion 15. The hollow cathode portion 15 includes, for example, a hollow cathode body 15a, a keeper electrode body 15b, a heater 15c, and a gas supply pipe 15d. The power processing unit 20 includes, for example, an anode power supply 30, an igniter unit 40, a heater power supply 50, a coil power supply 60, and a power control unit 100. The power processing unit 20 has a configuration in which a keeper power supply provided in the power processing unit of the conventional Hall thruster system is eliminated (removed), and instead, the igniter unit 40 is provided.

Each of the anode power supply 30, the heater power supply 50, and the coil power supply 60 is a direct current (DC) power supply that supplies power necessary for corresponding respective constituent elements provided in the Hall thruster 10. More specifically, the anode power supply 30 is a switching power supply that supplies, for example, power having a current value of 3 [A] at a maximum voltage value of 300 [V] or power having a current value of 20 [A] at a maximum voltage value of 300 [V], to the anode 12 in accordance with control from the power control unit 100. When the anode power supply 30 supplies power having a maximum voltage value of 300 [V] and a current value of 3 [A] to the anode 12, a 1 [kW]-class Hall thruster 10 is configured. When the anode power supply 30 supplies power having a maximum voltage value of 300 [V] and a current value of 20 [A] to the anode 12, a 6 [kW]-class Hall thruster 10 is configured. The power supplied by the anode power supply 30 is not limited to a maximum voltage value = 300 [V]. The anode power supply 30 may supply, for example, power having a maximum voltage value of 150 [V] or 1000 [V] or the like, in accordance with the performance of the Hall thruster 10.

The heater power supply 50 is a DC power supply that supplies, for example, power having a current value of 1 [A] at a voltage value of 100 [V], power having a current value of 10 [A] at a voltage value of 10 [V], or power having a current value of 5 [A] at a voltage value of 20 [V], to the heater 15c, in accordance with control from the power control unit 100. Although a configuration in which the negative side of the heater power supply 50 is connected to the negative side of the anode power supply 30 (or connected to a cathode electrode Ec connected to the hollow cathode body 15a) is shown in FIG. 1(c), the negative side of the heater power supply 50 may be connected, for example, to a dedicated electrode provided in the Hall thruster 10. The heater power supply 50 may be omitted, for example, when a high-voltage pulse is applied to the keeper electrode body 15b by the igniter unit 40 to be described below.

The coil power supply 60 is a DC power supply that supplies, for example, power having a current value of 1 [A] at a voltage value of 100 [V], power having a current value of 10 [A] at a voltage value of 10 [V], or power having a current value of 5 [A] at a voltage value of 20 [V], to the electromagnet 14, i.e., each of the internal electromagnet 14a and the external electromagnet 14b, in accordance with control from the power control unit 100.

The heater power supply 50 and the coil power supply 60 may be DC power supplies having a fixed voltage value or a fixed current value at which ON/OFF of a power output is controlled in accordance with control from the power control unit 100. The heater power supply 50 and the coil power supply 60 may be switching power supplies in which a value of a voltage or current to be supplied is controlled in accordance with control from the power control unit 100.

The igniter unit 40 is a constituent element that applies a voltage to the keeper electrode body 15b in place of a keeper power supply provided in a conventional power processing unit. Accordingly, the igniter unit 40 functions as a power supply circuit that performs a voltage application operation and a current supply operation, like a conventional keeper power supply. The voltage application operation is an operation for outputting (applying), for example, a high voltage such as 100 to 300 [V] as a no-load voltage value, to cause discharge between the hollow cathode body 15a and the keeper electrode body 15b. The current supply operation is, for example, an operation for supplying a current having a current value ranging from 0.x [A] (where x is a decimal number) to several amperes [A] to maintain a discharge state between the hollow cathode body 15a and the keeper electrode body 15b after discharge occurs between the hollow cathode body 15a and the keeper electrode body 15b due to the voltage application operation, at least until discharge occurs between the anode 12 and the hollow cathode body 15a and extraction of ions ionized from plasma is started. The igniter unit 40 generates a voltage to be applied to the keeper electrode body 15b on the basis of a voltage applied to the anode 12 by the anode power supply 30. The igniter unit 40 has a first end a connected to a line La on the positive side of the anode power supply 30, and a second end b connected to the keeper electrode body 15b (more specifically, to a keeper electrode Ek arranged in the Hall thruster 10 and connected to the keeper electrode body 15b). The igniter unit 40 generates an output voltage having a magnitude (voltage value) corresponding to the input voltage of the first end a, i.e., the voltage value of the voltage applied from the positive side of the anode power supply 30, and outputs the output voltage from the second end b. A conventional keeper power supply is, for example, a switching power supply configured by combining a large number of semiconductor parts and passive elements (coil elements, resistor elements, and capacitor elements) to perform a voltage application operation and a current supply operation by converting (boosting) the voltage of a system power supply in a spacecraft. In contrast, the igniter unit 40 includes, for example, only passive elements such as resistor elements and capacitor elements.

The igniter unit 40 is an example of a "voltage generation device." The line La is an example of a "first line."

The power control unit 100 controls power (applied voltage and flowing current) supplied from each of the anode power supply 30, the heater power supply 50, and the coil power supply 60 provided in the power processing unit 20 to corresponding respective constituent elements provided in the Hall thruster 10. For example, the power control unit 100 performs a control process so that the time during which the voltage value of the voltage applied from the anode power supply 30 to the anode 12 changes from 0 [V] to 300 [V], i.e., a so-called voltage rise time, becomes a predetermined time. For example, the power control unit 100 performs a control process so that the state is switched between ON (e.g., a state in which the voltage value is 100 [V]) and OFF (e.g., a state in which the voltage value is 0 [V]) of the voltage applied from the heater power supply 50 to the heater 15c and the voltage applied from the coil power supply 60 to the coil constituting the electromagnet 14.

The hollow cathode body 15a is an electron source that supplies electrons for starting an operation of the Hall thruster 10 by ionizing propellant gas supplied into the channel portion 11 and extracting ions, and that emits electrons for maintaining plasma and electrically neutralizing accelerated ions during the operation of the Hall thruster 10. The propellant gas identical to that supplied to the anode 12 is supplied to the hollow cathode body 15a from the gas supply pipe 15d. The hollow cathode body 15a ionizes the propellant gas supplied by the gas supply pipe 15d and emits the generated electrons to the channel portion **11** side. The negative side of the anode power supply 30 is connected to the cathode electrode Ec connected to the hollow cathode body 15a. Although an example in which the cathode electrode Ec is arranged on a side of the housing of the Hall thruster 10 opposite to the side that ejects ions extracted from plasma into outer space is shown in FIGS. 1(b) and 1(c), the hollow cathode body 15a itself (which may be the portion of the gas supply pipe 15d) may serve as the cathode electrode Ec. The keeper electrode body 15b is arranged in proximity to a tip portion of the hollow cathode body 15a. However, the hollow cathode body 15a and the keeper electrode body 15b are insulated from each other. Further, an outer periphery of the hollow cathode body 15a is covered with the heater 15c. The positive side of the heater power supply 50 is connected to the heater electrode Eh connected to the heater 15c. That is, the heater power supply 50 is connected between the heater 15c (heater electrode Eh) and the hollow cathode body 15a (cathode electrode Ec). The heater 15c generates heat in accordance with power supplied by the heater power supply 50, thereby heating a part referred to as an emitter or electron emission material (not shown) provided in the hollow cathode body 15a so that more electrons are emitted from the hollow cathode body 15a. The keeper electrode body 15b is supplied with power generated by the igniter unit 40 connected to the keeper electrode Ek. If a high voltage is applied to the keeper electrode body 15b by the power supplied from the igniter unit 40, discharge occurs between the hollow cathode body 15a and the keeper electrode body 15b, and due to this discharge, the propellant gas supplied into the hollow cathode body 15a from the gas supply pipe 15d is ionized to generate plasma. Electrons extracted from the plasma by a potential gradient between the hollow cathode body 15a and the keeper electrode body 15b are emitted to the channel portion 11 side. In the following description, discharge between the hollow cathode body 15a and the keeper electrode body 15b is also referred to as "keeper ignition," and plasma generated by this discharge (keeper ignition) is also referred to as "cathode plasma."

The anode 12 is a positive electrode for ionizing propellant gas supplied into the channel portion 11 by the gas supply pipe 12a and extracting ions. Whether or not the propellant gas is supplied into the channel portion 11 by the gas supply pipe 12a and an amount of propellant gas supplied are controlled, for example, by controlling the opening and closing of a valve arranged in the gas supply pipe 12a. A valve power supply (not shown) may be provided in the power processing unit 20. In this case, the power control unit 100 may control the opening and closing of the valve arranged in the gas supply pipe 12a by controlling values of a voltage and a current supplied from the valve power supply (not shown) to the valve. The positive side of the anode power supply 30 is connected to an anode electrode Ea of the anode 12. That is, the anode power supply 30 is connected between the anode 12 (anode electrode Ea) and the hollow cathode body 15a (cathode electrode Ec). Although an example in which the anode electrode Ea is arranged at an end portion of the housing of the Hall thruster 10 like the cathode electrode Ec is shown in FIGS. 1(b) and 1(c), the anode 12 itself may serve as the anode electrode Ea.

The electromagnet 14 generates a magnetic field in a range in which the anode 12 is arranged and surrounded by the wall portion 13. The electromagnet 14 has a configuration in which a coil is wound around a core made of a magnetic material. The positive side of the coil power supply 60 is connected to a coil positive electrode Em+ connected to a positive-side terminal of the coil. The negative side of the coil power supply 60 is connected to a coil negative electrode Em- connected to a negative-side terminal of the coil. The electromagnet 14 generates a magnetic field within the channel portion **11** in accordance with power supplied to the coil by the coil power supply 60. Although a detailed connection between the coil power supply 60 and the coil is omitted in FIG. **1****,** power from the coil power supply 60 is supplied to each of the coil of the internal electromagnet 14a and the coil of the external electromagnet 14b. For example, power from the coil power supply 60 is supplied to each of the coils of the internal electromagnet 14a and the external electromagnet 14b along a path returning from the positive side of the coil power supply 60 to the negative side of the coil power supply 60 through the coil positive electrode Em+, the positive-side terminal of the coil of the external electromagnet 14b, the negative-side terminal of the coil of the external electromagnet 14b, the positive-side terminal of the coil of the internal electromagnet 14a, the negative-side terminal of the coil of the internal electromagnet 14a, and the coil negative electrode Em-. The coil positive electrode Em+ and the coil negative electrode Em- are not limited to a configuration corresponding to each of the coil of the internal electromagnet 14a and the coil of the external electromagnet 14b. For example, a configuration in which a coil positive electrode Em+ and a coil negative electrode Em-corresponding to the coil of the internal electromagnet 14a and a coil positive electrode Em+ and a coil negative electrode Em- corresponding to the coil of the external electromagnet 14b are provided, i.e., the coil positive electrode Em+ and the coil negative electrode Em- are provided separately for each of the coil of the internal electromagnet 14a and the coil of the external electromagnet 14b, may be adopted. Furthermore, a configuration for supplying power to each of the coil of the internal electromagnet 14a and the coil of the external electromagnet 14b is not limited to the coil power supply 60. For example, a configuration in which the coil power supply 60 is not provided in the power processing unit 20 (and therefore, the coil positive electrode Em+ and the coil negative electrode Em- are not provided) may be adopted. In this case, for example, a configuration in which each of the coil of the internal electromagnet 14a and the coil of the external electromagnet 14b is connected between the hollow cathode body 15a and the cathode electrode Ec may be adopted. More specifically, a configuration in which each of the coils of the internal electromagnet 14a and the external electromagnet 14b is connected from the hollow cathode body 15a to the cathode electrode Ec via the positive-side terminal of the coil of the external electromagnet 14b, the negative-side terminal of the coil of the external electromagnet 14b, the positive-side terminal of the coil of the internal electromagnet 14a, and the negative-side terminal of the coil of the internal electromagnet 14a so that power is supplied to each of the coil of the internal electromagnet 14a and the coil of the external electromagnet 14b may be adopted. In this case, the electromagnet 14 generates, within the channel portion 11, a magnetic field corresponding to the power supplied to the coil by supplying a current, which flows when the hollow cathode body 15a extracts ions from plasma within the channel portion 11, to the coil.

In the Hall thruster 10, the anode 12 and the hollow cathode body 15a are insulated from each other. In the Hall thruster 10, in a state in which the generation of a magnetic field within the channel portion 11 by the electromagnet 14 and the application of a high voltage to the anode 12 by power supplied from the anode power supply 30 occur in this order, in the reverse order, or simultaneously, if electrons are extracted from the propellant gas ionized by cathode plasma of the hollow cathode body 15a and emitted to the channel portion 11 side, discharge occurs between the anode 12 and the hollow cathode body 15a. By this discharge, the propellant gas supplied into the channel portion 11 from the gas supply pipe 12a is ionized to generate plasma. In the Hall thruster 10, ions are extracted from the plasma while being accelerated by a potential gradient within the generated plasma, and are ejected from the channel portion 11 into outer space. In the following description, discharge between the anode 12 and the hollow cathode body 15a is also referred to as "anode ignition," and plasma generated within the channel portion 11 by this discharge (anode ignition) is also referred to as "anode plasma."

### [Operation of Hall Thruster System]

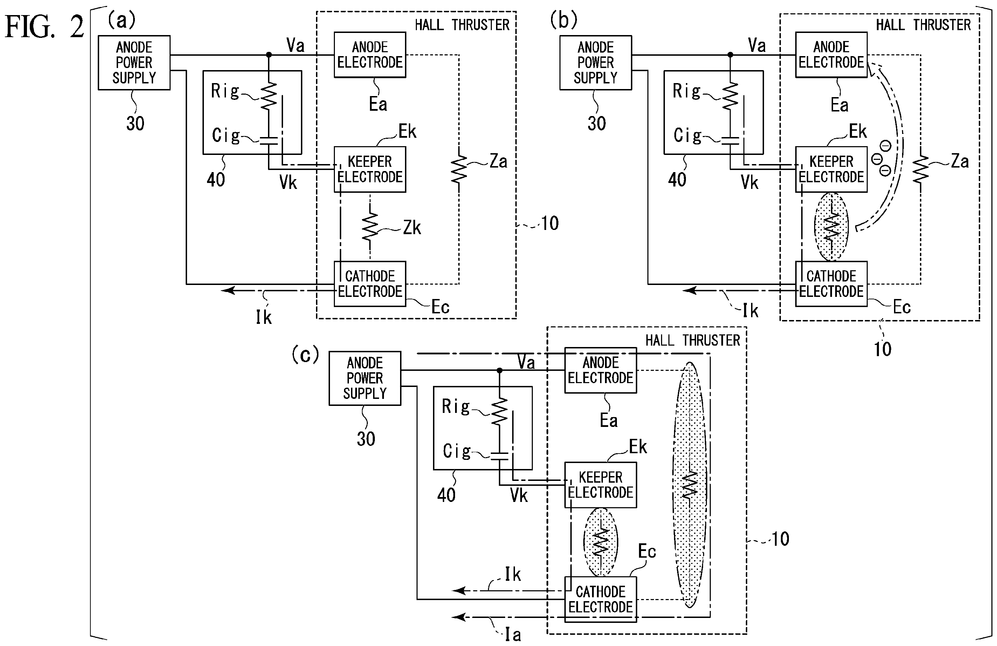

Next, the operation of the Hall thruster system 1 will be described. FIG. 2 is a diagram showing an example of an operation of the Hall thruster system 1 using the voltage generation device (igniter unit 40) according to an embodiment. In FIG. 2, constituent elements related to extraction of ions ejected from the Hall thruster 10 into outer space and their operations are schematically shown. More specifically, in FIG. 2, the electrodes of the anode electrode Ea, the cathode electrode Ec, and the keeper electrode Ek, which are related to extraction of ions from anode plasma, provided in the Hall thruster 10, and the anode power supply 30 and the igniter unit 40 connected to these electrodes are shown. Also, in FIG. 2, the igniter unit 40 including a resistor element Rig and a capacitor element Cig is shown as an example of the configuration of the igniter unit 40. More specifically, in FIG. 2, the igniter unit 40 having a configuration in which one end of the resistor element Rig serves as the first end a and is connected to the line La, the other end of the resistor element Rig and one end of the capacitor element Cig are connected in series, and the other end of the capacitor element Cig serves as the second end b and is connected to the keeper electrode Ek is shown.

Although an example in which the igniter unit 40 includes one resistor element Rig and one capacitor element Cig is shown in FIG. 2, each of the number of resistor elements Rig provided in the igniter unit 40 and the number of capacitor elements Cig provided in the igniter unit 40 is not limited to one. That is, the resistor element Rig may have a configuration in which a plurality of resistor elements are connected in series and/or in parallel. Further, the capacitor element Cig may have a configuration in which a plurality of capacitor elements are connected in series and/or in parallel. For example, when a large current is expected to flow through the igniter unit 40, the resistor element Rig may have a configuration in which two resistor elements are connected in parallel. For example, when the capacitance of the capacitor element Cig provided in the igniter unit 40 is increased, a configuration in which a plurality of small-capacitance capacitor elements are connected in parallel may be adopted to suppress deterioration in frequency characteristics.

In the following description of the operation of the Hall thruster system 1, for ease of description, it is assumed that power related to extraction of ions from plasma is supplied to corresponding constituent elements under control by the power control unit 100. More specifically, it is assumed that, at least, power for controlling a valve so that the valve has an open state to supply propellant gas to the anode 12 is supplied from a valve power supply (not shown) to a valve arranged in the gas supply pipe 12a. In addition, power may be supplied from the heater power supply 50 to the heater 15c to heat an emitter or electron emission material (not shown), and power may be supplied from the coil power supply 60 to a coil constituting the electromagnet 14 to generate a magnetic field within the channel portion 11.

In FIG. 2, an impedance component Zk of a space between the keeper electrode Ek and the cathode electrode Ec and an impedance component Za of a space between the anode electrode Ea and the cathode electrode Ec are shown. Although each of the impedance component Zk and the impedance component Za is indicated by a resistor symbol in FIG. 2, each of the impedance component Zk and the impedance component Za includes an inductance component and a capacitance component in addition to a resistance component. Each of the impedance component Zk and the impedance component Za, when a voltage applied to the corresponding electrodes is low (i.e., when keeper ignition or anode ignition has not occurred), has a high resistance value of, for example, several megaohms [MΩ] or more, and functionally acts as insulation resistance having an infinite resistance value, so that no current flows between the electrodes. On the other hand, if the voltage applied to the corresponding electrodes becomes high and keeper ignition or anode ignition occurs, each of the impedance component Zk and the impedance component Za has a low resistance value of, for example, several kiloohms [kΩ] (in some cases, several tens to several hundreds of ohms [Ω]) due to conductive plasma newly generated (appearing) according to this discharge, so that current flows between the electrodes via the impedance component Zk or the impedance component Za.

When ions extracted from plasma are ejected from the Hall thruster 10 into outer space, the power control unit 100 controls the anode power supply 30 to output a high voltage (here, 300 [V]) so that the high voltage is applied to the anode 12. At this time, the power control unit 100 performs a control process so that the voltage value output from the anode power supply 30 rises from 0 [V] to 300 [V] with a rise time of, for example, several tens of microseconds [µs]. Thereby, the voltage output from the anode power supply 30 is applied to the anode electrode Ea (i.e., the anode 12). In FIG. 2(a), a state in which an anode voltage Va from the anode power supply 30 is applied to the anode electrode Ea under control from the power control unit 100 is shown.

Also, a voltage corresponding to the rise of the anode voltage Va is applied to the keeper electrode Ek (i.e., the keeper electrode body 15b) via the igniter unit 40. More specifically, if the anode voltage Va is applied to the anode electrode Ea, the capacitor element Cig provided in the igniter unit 40 is charged with the anode voltage Va, and a voltage corresponding to a difference between the anode voltage Va and the voltage of the capacitor element Cig is applied to the keeper electrode Ek. In FIG. 2(a), a state in which a keeper voltage Vk from the igniter unit 40 is applied to the keeper electrode Ek is shown. In the Hall thruster 10 of this stage (a state in which keeper ignition has not occurred), a current corresponding to the impedance component Zk and the keeper voltage Vk flows between the keeper electrode Ek and the cathode electrode Ec, but the current value is small because the impedance component Zk is extremely large. In FIG. 2(a), for reference, a state in which a predetermined keeper current Ik corresponding to the keeper voltage Vk applied from the igniter unit 40 flows through the keeper electrode Ek, the impedance component Zk of the space between the keeper electrode body 15b and the hollow cathode body 15a, and the cathode electrode Ec is shown.

Here, the keeper voltage Vk increases to a voltage value identical to the anode voltage Va with a predetermined rise time determined by the anode voltage Va increased in accordance with control by the power control unit 100, the resistance value of the resistor element Rig, and the capacitance value of the capacitor element Cig. For example, when the anode voltage Va has the same voltage value and the resistor element Rig has the same resistance value, the larger the capacitance value of the capacitor element Cig, the longer it takes to charge (i.e., the slower the voltage of the capacitor element Cig increases), but the keeper voltage Vk, which is a value (difference) obtained by subtracting the voltage of the capacitor element Cig from the anode voltage Va, becomes higher. Also, the keeper voltage Vk is a voltage for causing discharge (keeper ignition) between the hollow cathode body 15a and the keeper electrode body 15b, generating cathode plasma, and extracting electrons therefrom to emit the electrons to the channel portion 11 side. Therefore, focusing on keeper ignition, it may be considered preferable to increase the capacitance value of the capacitor element Cig to increase the voltage value of the keeper voltage Vk. However, a larger capacitance value of the capacitor element Cig means that the volume of the capacitor element Cig, which is a high-withstand-voltage capacitor element, becomes larger, and the weight also increases. Therefore, in the igniter unit 40 mounted on the spacecraft, it is considered preferable to adopt a capacitor element Cig having a capacitance value as small as possible within a range in which the propellant gas can be ignited, to ensure ignition performance of the propellant gas while achieving the size reduction and cost reduction of the igniter unit 40 and further achieving the weight reduction of the spacecraft.

Thereafter, when the voltage value of the keeper voltage Vk reaches a predetermined voltage value that causes discharge between the hollow cathode body 15a and the keeper electrode body 15b, keeper ignition occurs between the hollow cathode body 15a and the keeper electrode body 15b, and plasma (cathode plasma) is generated. Also, electrons of the propellant gas are extracted by a potential gradient in a region where this cathode plasma is generated. At this time, because the anode voltage Va (=300 [V]) is applied to the anode 12, electrons extracted from the propellant gas ionized by the cathode plasma move toward the anode 12, i.e., are emitted to the channel portion 11 side. In FIG. 2(b), a state in which electrons extracted by the generated cathode plasma are emitted to the channel portion **11** side is shown.

At this time, energy necessary for generating the cathode plasma is supplied by the capacitor element Cig. Also, after the cathode plasma is generated, the keeper voltage Vk has a voltage value corresponding to the potential of the cathode plasma at the keeper electrode Ek, and the capacitor element Cig is charged to a voltage value corresponding to a difference between the anode voltage Va and the keeper voltage Vk (anode voltage Va - keeper voltage Vk).

By the way, when keeper ignition occurs between the hollow cathode body 15a and the keeper electrode body 15b, a large instantaneous current (inrush current) tends to flow through the capacitor element Cig. The resistor element Rig reduces this inrush current that instantaneously flows through the capacitor element Cig. Therefore, focusing on reducing the inrush current flowing through the capacitor element Cig, it may be considered preferable to increase the resistance value of the resistor element Rig to further suppress the peak of the inrush current. However, a larger resistance value of the resistor element Rig results in increased heat generation (heat generation during a steady-state operation) in the resistor element Rig, which is a high-withstand-voltage resistor element. Therefore, in the igniter unit 40 mounted on the spacecraft, it is considered preferable to adopt a resistor element Rig having a resistance value that can suppress the peak of the inrush current to a level at which the capacitor element Cig is not destroyed by the inrush current, thereby achieving the size reduction and cost reduction of the igniter unit 40 and further achieving the weight reduction of the spacecraft.

Thereafter, in the Hall thruster 10, discharge (anode ignition) occurs between the anode 12 and the hollow cathode body 15a due to electrons emitted from the hollow cathode portion 15 to the channel portion 11 side (electrons moving toward the anode 12), and plasma (anode plasma) is generated. In FIG. 2(c), a state in which anode plasma is generated between the anode 12 and the hollow cathode body 15a, and an anode current Ia corresponding to the anode voltage Va flows through the anode electrode Ea, the impedance component Za of the space between the anode 12 and the hollow cathode body 15a, and the cathode electrode Ec is shown. Thereby, in the Hall thruster 10, ions of the propellant gas extracted by the potential gradient within the anode plasma are accelerated and ejected from the channel portion 11 into outer space. That is, an operation for providing thrust to the spacecraft in the Hall thruster system 1 is started.

Here, in the Hall thruster 10, the keeper voltage Vk during an operation in which ions are emitted from the channel portion 11 is fixed at a certain voltage value while oscillating. Therefore, in the igniter unit 40, the capacitor element Cig is continuously charged with a voltage corresponding to the difference between the anode voltage Va and the keeper voltage Vk (anode voltage Va - keeper voltage Vk). In other words, in the Hall thruster system 1, while the Hall thruster 10 continues a steady operation in which thrust is applied to the spacecraft, a small AC component current in the keeper current Ik continuously flows, but this does not result in a large loss, and thrust can continuously applied to the spacecraft. That is, in the Hall thruster system 1, the steady operation can be continued with substantially no power loss and heat generation.

### [Modification Example (Part 1) of Configuration of Igniter Unit]

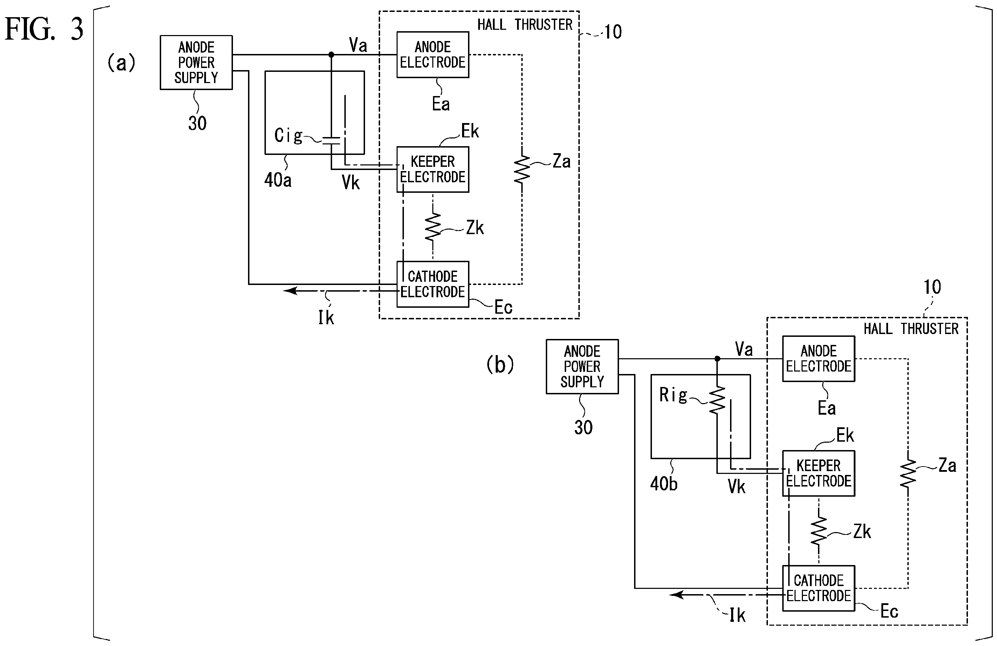

In FIG. 2, an example in which the igniter unit 40 includes the resistor element Rig and the capacitor element Cig is shown. However, the configuration of the igniter unit 40 is not limited to that shown in FIG. 2. FIG. 3 is a diagram showing an example of another configuration in the voltage generation device (igniter unit 40) according to an embodiment. In FIG. 3, two other examples of the configuration of the igniter unit 40 are shown.

In FIG. 3(a), an example of an igniter unit 40 (hereinafter referred to as "igniter unit 40a") including the capacitor element Cig is shown. That is, in FIG. 3(a), the igniter unit 40a having a configuration in which the resistor element Rig is omitted from the igniter unit 40 shown in FIG. 2 is shown. In the igniter unit 40a, one end of the capacitor element Cig serves as a first end a and is connected to the line La, and the other end of the capacitor element Cig serves as a second end b and is connected to the keeper electrode Ek. Also, in the igniter unit 40a, as in the example shown in FIG. 2(a), the keeper voltage Vk corresponding to an increase in the anode voltage Va is applied to the keeper electrode Ek. Also, in FIG. 3(a), as in the example shown in FIG. 2(a), a state in which the keeper voltage Vk from the igniter unit 40a is applied to the keeper electrode Ek is shown. Also, in the configuration shown in FIG. 3(a), in the Hall thruster 10 of this stage (a state in which keeper ignition has not occurred), a current corresponding to the impedance component Zk between the keeper electrode Ek and the cathode electrode Ec and the keeper voltage Vk flows, but the current value is small because the impedance component Zk is extremely large. Also, in FIG. 3(a), as in the example shown in FIG. 2(a), for reference, a state in which a predetermined keeper current Ik corresponding to the keeper voltage Vk applied from the igniter unit 40a flows through the keeper electrode Ek, the impedance component Zk of the space between the keeper electrode body 15b and the hollow cathode body 15a, and the cathode electrode Ec is shown. As described above, the resistor element Rig decreases an inrush current that instantaneously flows into the capacitor element Cig when keeper ignition occurs between the hollow cathode body 15a and the keeper electrode body 15b. Therefore, if the inrush current that instantaneously flows into the capacitor element Cig when keeper ignition occurs is a magnitude within an allowable range, or if the inrush power can be suppressed (reduced) by a resistance component of the capacitor element Cig, the resistor element Rig may be omitted in the igniter unit 40, and a configuration including only the capacitor element Cig may be adopted. In this case, the igniter unit 40a can further reduce the size and cost of the igniter unit 40 and can further reduce the weight of the spacecraft.

In FIG. 3(b), an example of an igniter unit 40 (hereinafter referred to as "igniter unit 40b") including the resistor element Rig is shown. That is, in FIG. 3(b), the igniter unit 40b having a configuration in which the capacitor element Cig is omitted from the igniter unit 40 shown in FIG. 2 is shown. In the igniter unit 40b, one end of the resistor element Rig serves as a first end a and is connected to the line La, and the other end of the resistor element Rig serves as a second end b and is connected to the keeper electrode Ek. Also, in the igniter unit 40b, as in the example shown in FIG. 2(a), the keeper voltage Vk corresponding to an increase in the anode voltage Va is applied to the keeper electrode Ek. Also, in FIG. 3(b), as in the example shown in FIG. 2(a), a state in which the keeper voltage Vk from the igniter unit 40b is applied to the keeper electrode Ek is shown. Also, in the configuration shown in FIG. 3(b), in the Hall thruster 10 of this stage (a state in which keeper ignition has not occurred), a current corresponding to the impedance component Zk between the keeper electrode Ek and the cathode electrode Ec and the keeper voltage Vk flows, but the current value is small because the impedance component Zk is extremely large. Also, in FIG. 3(b), as in the example shown in FIG. 2(a), for reference, a state in which a predetermined keeper current Ik corresponding to the keeper voltage Vk applied from the igniter unit 40b flows through the keeper electrode Ek, the impedance component Zk of the space between the keeper electrode body 15b and the hollow cathode body 15a, and the cathode electrode Ec is shown. As described above, the capacitor element Cig is continuously charged with a voltage of a difference between the anode voltage Va and the keeper voltage Vk (anode voltage Va - keeper voltage Vk), such that a small AC component current in the keeper current Ik flows, but this does not result in a large loss. In other words, the capacitor element Cig suppresses a DC component current in the keeper current Ik that flows while the Hall thruster 10 continues a steady operation, in combination with the resistor element Rig. Therefore, if it is permissible that a minute DC component current in the keeper current Ik flows while the Hall thruster 10 continues the steady operation, and that losses become somewhat larger due to this minute DC component current, the capacitor element Cig may be omitted in the igniter unit 40, and a configuration including only the resistor element Rig can be adopted. In this case, the igniter unit 40b can further reduce the size and cost of the igniter unit 40 and can further reduce the weight of the spacecraft.

Each of the igniter unit 40a and the igniter unit 40 is also an example of a "voltage generation device."

### [Modification Example (part 2) of Configuration of Igniter Unit]

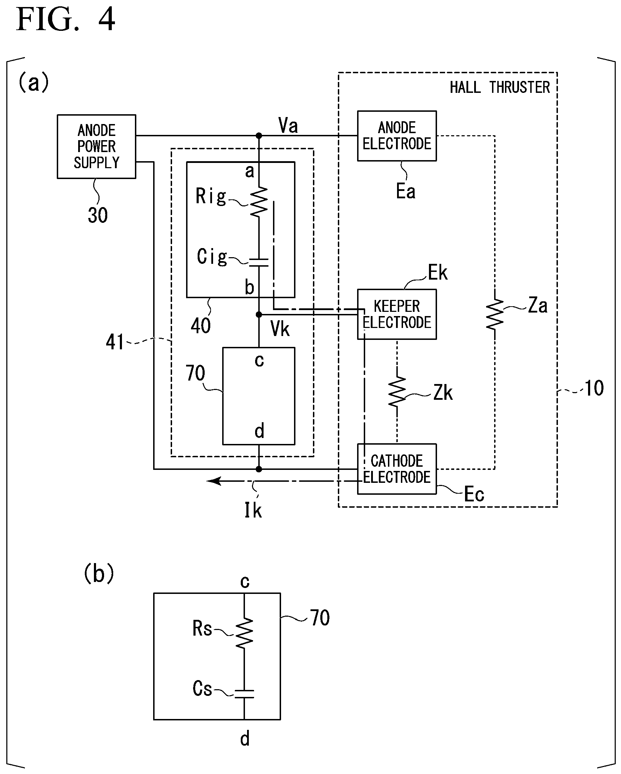

In FIG. 2, an example in which the igniter unit 40 is connected (arranged) between the anode electrode Ea and the keeper electrode Ek of the Hall thruster 10 is shown. However, the connection between the igniter unit 40 and the Hall thruster 10 is not limited to that shown in FIG. 2. FIG. 4 is a diagram showing yet another example of a configuration in the voltage generation device (igniter unit 40) according to the embodiment.

An igniter unit 41 shown in FIG. 4(a) has a configuration in which a protection circuit 70 is added to the igniter unit 40 shown in FIG. 2. The protection circuit 70 is a circuit that absorbs a surge current (inrush current) that transiently flows when keeper ignition occurs, i.e., a so-called snubber circuit. The igniter unit 41 has a configuration in which the igniter unit 40 and the protection circuit 70 are connected in series. More specifically, in the igniter unit 41, the first end a of the igniter unit 40 is connected to the line La on the positive side of the anode power supply 30, and the second end b of the igniter unit 40 is connected to the keeper electrode Ek. Also, in the igniter unit 41, a first end c of the protection circuit 70 is connected to a line connecting the second end b of the igniter unit 40 and the keeper electrode Ek, and a second end d of the protection circuit 70 is connected to the cathode electrode Ec. Thereby, in the igniter unit 41, the protection circuit 70 absorbs the inrush current that transiently flows between the keeper electrode Ek and the cathode electrode Ec when keeper ignition occurs, thereby protecting the hollow cathode portion 15.

The protection circuit 70 has, for example, a configuration in which a resistor element Rs and a capacitor element Cs are connected in series, as shown in FIG. 4(b). More specifically, the protection circuit 70 has a configuration in which one end of the resistor element Rs serves as the first end c and is connected to the igniter unit 40 and the keeper electrode Ek, the other end of the resistor element Rs and one end of the capacitor element Cs are connected in series, and the other end of the capacitor element Cs serves as the second end d and is connected to the cathode electrode Ec. The configuration of the protection circuit 70 is not limited to that shown in FIG. 4(b). For example, the protection circuit 70 may include a Zener diode element instead of the resistor element Rs and the capacitor element Cs, or may be configured to include a Zener diode element in addition to the resistor element Rs and the capacitor element Cs.

The igniter unit 41 is also an example of a "voltage generation device."

### [Modification Example of Connection of Igniter Unit]

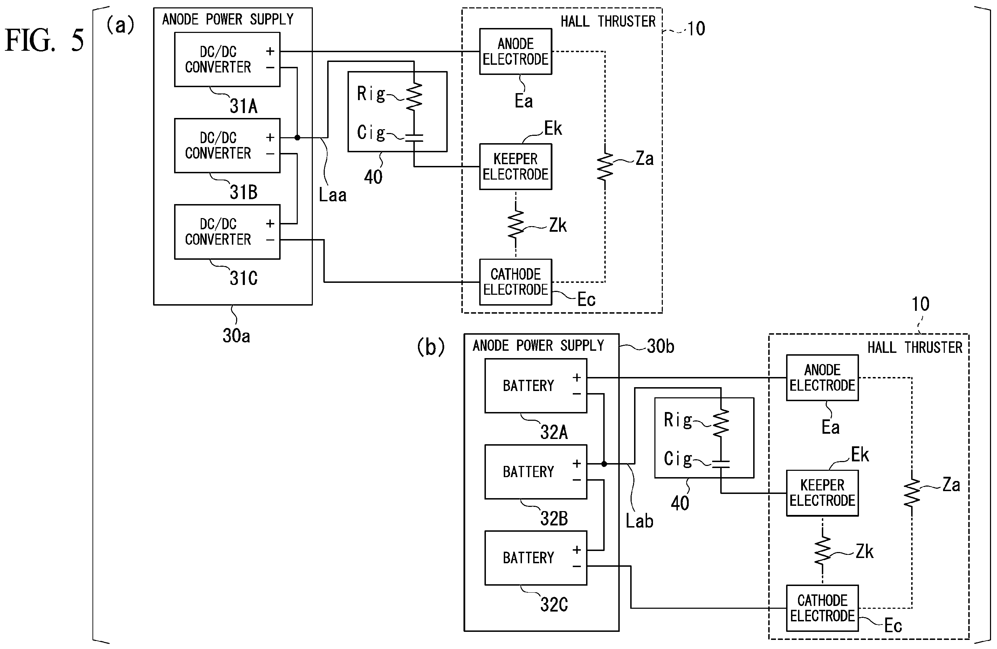

Because the configuration of the anode power supply 30 has not been described in detail in the above-described embodiment and modification examples, a case where the first end a of the igniter unit 40 is connected to the line La on the positive side of the anode power supply 30 has been described with reference to FIG. 2. However, according to the configuration of the anode power supply 30, the first end a of the igniter unit 40 (which may be the igniter unit 40a or the igniter unit 40b) may be connected to a line different from the line La of the anode power supply 30. An example of this case will be described below. FIG. 5 is a diagram showing an example of a configuration of the anode power supply 30 used by the voltage generation device (igniter unit 40) and a connection of the voltage generation device (igniter unit 40) according to the embodiment. In FIG. 5, two examples of a configuration of the anode power supply 30 having a maximum voltage value of 300 [V] is shown.

In FIG. 5(a), an example in which the anode power supply 30 (hereinafter referred to as "anode power supply 30a") is configured by connecting three DC/DC converters 31 (DC/DC converters 31A to 31C) in series is shown. Each of the DC/DC converters 31A, 31B, and 31C is, for example, a DC/DC converter that converts (boosts) a voltage of a system power supply in the spacecraft and outputs the converted voltage. The system power supply is, for example, a storage battery that stores power generated by a solar cell paddle (solar power generation device) provided in the spacecraft. In the example shown in FIG. 5(a), each DC/DC converter 31 outputs a voltage having a voltage value of 100 [V]. When the first end a of the igniter unit 40 is connected to the positive side of the DC/DC converter 31A constituting the anode power supply 30a, the operation of the Hall thruster system 1 is similar to that of the Hall thruster system 1 shown in FIG. 2. In contrast, in the igniter unit 40 shown in FIG. 5(a), the first end a is connected to a line Laa connecting the positive side of the DC/DC converter 31B and the negative side of the DC/DC converter 31A, and the second end b is connected to the keeper electrode Ek. In this case, the igniter unit 40 generates an output voltage having a magnitude (voltage value) corresponding to the input voltage of the first end a, i.e., the voltage value (the voltage value = 200 [V]) of the voltage output from the positive side of the DC/DC converter 31A, and outputs the generated voltage from the second end b. Thereby, in the example shown in FIG. 5(a), it is possible to perform an operation similar to that of the igniter unit 40 shown in FIG. 2 while reducing the voltage of the capacitor element Cig provided in the igniter unit 40 (here, while reducing the voltage value =300 [V] to 200 [V]) compared with the voltage of the capacitor element Cig provided in the igniter unit 40 shown in FIG. 2. Therefore, it is possible to adopt a capacitor element Cig having a lower withstand voltage while ensuring performance for igniting propellant gas in the igniter unit 40 shown in FIG. 5(a), thereby expanding the options for the capacitor element Cig to be provided and making it possible to further reduce the size and weight of the igniter unit 40 as compared with the igniter unit 40 shown in FIG. 2. Also, when the size of the igniter unit 40 is reduced, the weight of the spacecraft can be further reduced.

In FIG. 5(b), an example in which the anode power supply 30 (hereinafter referred to as "anode power supply 30b") is configured by connecting three batteries 32 (batteries 32A to 32C) in series is shown. Each of the batteries 32A, 32B, and 32C is, for example, a storage battery that stores a voltage when the storage battery is charged by a system power supply in the spacecraft. Also, in the example shown in FIG. 5(b), each battery 32 outputs a voltage having a voltage value = 100 [V]. When the first end a of the igniter unit 40 is connected to the positive side of the battery 32A constituting the anode power supply 30b, the operation of the Hall thruster system 1 is similar to that of the Hall thruster system 1 shown in FIG. 2. In contrast, in the igniter unit 40 shown in FIG. 5(b), the first end a is connected to a line Lab connecting the positive electrode side of the battery 32B and the negative side of the battery 32A, and the second end b is connected to the keeper electrode Ek. Also, in this case, the igniter unit 40 generates an output voltage having a magnitude (voltage value) corresponding to the input voltage of the first end a, i.e., the voltage value (voltage value = 200 [V]) of the voltage output from the positive side of the battery 32A, and outputs the generated voltage from the second end b. Thereby, in the example shown in FIG. 5(b), as in the example shown in FIG. 5(a), it is also possible to perform an operation similar to that of the igniter unit 40 shown in FIG. 2 while reducing the voltage of the capacitor element Cig provided in the igniter unit 40 (here, while reducing the voltage value = 300 [V] to 200 [V]) compared with the voltage of the capacitor element Cig provided in the igniter unit 40 shown in FIG. 2. Therefore, in the igniter unit 40 shown in FIG. 5(b), as in the igniter unit 40 shown in FIG. 5(a), it is possible to adopt a capacitor element Cig having a lower withstand voltage while ensuring performance for igniting propellant gas, thereby expanding the options for the capacitor element Cig to be provided and making it possible to further reduce the size and weight of the igniter unit 40 compared with the igniter unit 40 shown in FIG. 2. Also, when the size of the igniter unit 40 is reduced, the weight of the spacecraft can be further reduced.

As described above, the igniter unit 40 can be connected in accordance with the configuration of the anode power supply 30 and the power (voltage value) to be supplied to the keeper electrode Ek (i.e., the keeper electrode body 15b). Although a case in which the anode power supply 30 includes three DC/DC converters 31 or three batteries 32 is shown in FIG. 5, it is also possible to consider a case where the anode power supply 30 includes four or more DC/DC converters 31 or four or more batteries 32 as in the above-described example. In this case, it is only necessary for the configuration and operation to be equivalent to those shown in FIG. 5. Accordingly, detailed descriptions of the configuration and operation of the Hall thruster system 1 in a case where the number of DC/DC converters 31 or batteries 32 constituting the anode power supply 30 is different are omitted.

Each of the DC/DC converter 31 and the battery 32 is an example of a "power supply module." The DC/DC converter 31A and the battery 32A are examples of a "first power supply module," and the DC/DC converter 31B and the battery 32B are examples of a "second power supply module." The line Laa and the line Lab are examples of a "line connecting the first power supply module and the second power supply module in series," and are also examples of a "first line."

As described above, in the Hall thruster system 1 including the power processing unit 20 to which the igniter unit 40 of the embodiment is applied, a keeper power supply provided in the power processing unit in a conventional Hall thruster system is eliminated (removed), and instead, the igniter unit 40 including both of the resistor element Rig and the capacitor element Cig or only one passive element thereof is provided. Also, in the igniter unit 40 of the embodiment, as in the conventional keeper power supply, keeper ignition is caused between the hollow cathode body 15a and the keeper electrode body 15b, and electrons extracted from the propellant gas supplied into the hollow cathode body 15a from the gas supply pipe 15d are emitted to the channel portion 11 side by cathode plasma generated according to the keeper ignition. Thereby, also, in the Hall thruster system 1 including the power processing unit 20 to which the igniter unit 40 of the embodiment is applied, as in the conventional Hall thruster system, anode ignition is caused between the anode 12 and the hollow cathode body 15a, and ions extracted by ionizing the propellant gas due to anode plasma generated according to the anode ignition are accelerated by an electric field inside the anode plasma and are ejected from the channel portion **11** into outer space. Thereby, also, in the Hall thruster system 1 including the power processing unit 20 to which the igniter unit 40 of the embodiment is applied, as in the conventional Hall thruster system, thrust can be applied to the spacecraft. Moreover, because the igniter unit 40 of the embodiment includes only passive elements, it is possible to reduce the size and cost compared to the conventional keeper power supply, and weight reduction of the spacecraft on which the Hall thruster system 1 including the power processing unit 20 to which the igniter unit 40 of the embodiment is applied is mounted can be implemented.

In the above-described embodiment, a configuration in which the igniter unit 40 is provided in the power processing unit 20 has been described. However, the igniter unit 40 is not limited to a configuration in which it is provided in the power processing unit 20. For example, the igniter unit 40 may be provided in the Hall thruster 10. In this case, it is only necessary for the configuration and operation of the Hall thruster system **1,** i.e., the igniter unit 40, the power processing unit 20, and the Hall thruster 10, to be made equivalent to the configuration and operation of the Hall thruster system 1 including the power processing unit 20 to which the igniter unit 40 of the above-described embodiment is applied. Therefore, detailed descriptions of the configuration and operation of the Hall thruster system 1 in which the igniter unit 40 is provided in the Hall thruster 10 are omitted.

Although modes for carrying out the present invention have been described using embodiments, the present invention is not limited to the embodiments and various modifications and substitutions can also be made without departing from the scope and spirit of the present invention.

### REFERENCE SIGNS LIST

1 Hall thruster system
10 Hall thruster
11 Channel portion
12 Anode
12a Gas supply pipe
13 Wall portion
14 Electromagnet
14a Internal electromagnet
14b External electromagnet
15 Hollow cathode portion
15a Hollow cathode body
15b Keeper electrode body
15c Heater
15d Gas supply pipe
20 Power processing unit (PPU)
30, 30a, 30b Anode power supply
31, 31A, 31B, 31C DC/DC converter
32, 32A, 32B, 32C Battery
40, 40a, 40b, 41 Igniter unit
50 Heater power supply
60 Coil power supply
70 Protection circuit
100 Power control unit
Ea Anode electrode
Ec Cathode electrode
Ek Keeper electrode
Eh Heater electrode
Em+ Coil positive electrode
Em- Coil negative electrode
Rig Resistor element
Rs Resistor element
Cig Capacitor element
Cs Capacitor element

## Claims

1. A voltage generation device providable in a Hall thruster system that generates thrust for a spacecraft,
wherein a Hall thruster constituting the Hall thruster system includes an anode electrode and a cathode electrode, a first end of the voltage generation device is connected to a first line on a side of the anode electrode in an anode power supply that supplies power between the anode electrode and the cathode electrode of the Hall thruster, and a second end of the voltage generation device that outputs an output voltage corresponding to an input voltage at the first end is connected to a keeper electrode arranged in proximity to a hollow cathode connected to the cathode electrode.

2. The voltage generation device according to claim 1, wherein the first line is a line connecting the anode power supply and the anode electrode.

3. The voltage generation device according to claim **1,**
wherein the anode power supply includes a plurality of power supply modules connected in series, and
wherein the first end is connected to a line connecting, in series, a first power supply module and a second power supply module.

4. The voltage generation device according to claim 3, wherein the power supply module is a DC/DC converter.

5. The voltage generation device according to claim 3, wherein the power supply module is a battery.

6. The voltage generation device according to any one of claims 1 to 5, comprising:
a resistor element; and
a capacitor element,
wherein one end of the resistor element is connected to the first end, the other end of the resistor element and one end of the capacitor element are connected in series, and the other end of the capacitor element is connected to the second end.

7. The voltage generation device according to any one of claims 1 to 5, comprising:
a capacitor element,
wherein one end of the capacitor element is connected to the first end, and the other end of the capacitor element is connected to the second end.

8. The voltage generation device according to any one of claims 1 to 5, comprising:
a resistor element,
wherein one end of the resistor element is connected to the first end, and the other end of the resistor element is connected to the second end.
